# EUROPEAN PATENT SPECIFICATION

(11) **EP 2 886 469 B1**
(45) Date of publication and mention of the grant of the patent: **18.05.2016**
(21) Application number: 14185151.9
(22) Date of filing: 17.09.2014
(51) Int. Cl.: B65B 23/14, B65B 35/40, B65B 59/02, B65G 59/06

(54) **Feeding device for a packaging machine**
Zuführvorrichtung für eine Verpackungsmaschine
Dispositif d'alimentation pour une machine d'emballage

(30) Priority: 17.12.2013 IT TO20131028
(43) Date of publication of application: 24.06.2015
(73) Proprietor: Cavanna S.p.A., 28077 Prato Sesia (NO) (IT)
(72) Inventor: Brolli, Elio, I-28077 Prato Sesia (Novara) (IT); Pistolesi, Alessandro, I-28077 Prato Sesia (Novara) (IT)
(74) Representative: Marchitelli, Mauro

(56) References cited:
- EP-A1- 0 709 289
- EP-A1- 1 619 125
- GB-A- 1 301 411
- US-B1- 6 543 989

## Description

### Field of the invention

The present invention relates to a feeding device for a packaging machine.

More precisely, the invention relates to a feeding device suitable for cyclically extracting a single product or a stack formed from a preset number of products from a continuous vertical array of products.

### State of the art

Packaging machines of the flow-pack type are normally equipped with a feeding device that feeds the packaging machine with a continuous succession of products to be packaged, formed from individual products or from stacks made up of a preset number of individual products, in which the products to be packaged are fed to the packaging machine along a horizontal feeding direction, and are spaced apart from each other along this direction. A known solution to obtain a continuous succession of individual products or stacks of individual products involves the arrangement of a continuous vertical array of products in a channel having a vertical lower end, and cyclic extraction of individual products or stacks formed from a preset number of individual products, from the lower end of the continuous array.

In the known solutions, the extraction of individual products or stacks of individual products from the lower end of the continuous array is carried out by means of an extractor element, which is provided with a movement in the horizontal direction between a retracted position and an extracted position. The extractor element is also provided with a movement in the vertical direction between a lowered position and a raised position. The channel in which the continuous vertical array is contained has a mask that is movable in a vertical direction between a lowered position and a raised position in a manner coordinated with the movement in the vertical direction of the extractor element. The stroke in the vertical direction of the extractor element and of the mask has a fixed value equal to the height of the individual products or stacks of individual products to be extracted at each cycle of the extractor element.

It has been observed that in the case of baked goods, the thickness of the products does not remain constant over time. During a working day, the thickness of the products can vary as a function of environmental parameters, such as the temperature and humidity of the air, or as a function of the process parameters, such as the oven temperature, the humidity of the dough, etc. If an individual product is subjected to a variation in height Δh, and if at each cycle stacks of products are extracted, formed from n products, the stacks are subject to a variation in height equal to n x Δh.

The variation in the height of the products causes problems during the extraction step of the products from the lower end of the continuous vertical array. Indeed, if the lower edge of the mask is not positioned correctly with respect to the products that need to be extracted, the products can become damaged by rubbing against the lower edge of the mask.

### Object and summary

The present invention aims to provide a feeding device for a packaging machine that overcomes the above drawback.

According to the present invention, this object is achieved by a feeding device having the characteristics forming the subject of claim 1.

The claims form an integral part of the disclosure given in relation to the invention.

### Brief description of the drawings

The present invention will now be described in detail with reference to the accompanying drawings, given purely by way of non-limiting example, wherein:
- Figure 1 is a perspective view of a feeding device according to the present invention,
- Figure 2 is a section along the line II-II of Figure 1, illustrating the feeding device in a first step of the working cycle, and
- Figures 3 to 5 are sections analogous to Figure 2, illustrating the successive steps of the working cycle of the feeding device.

### Detailed description

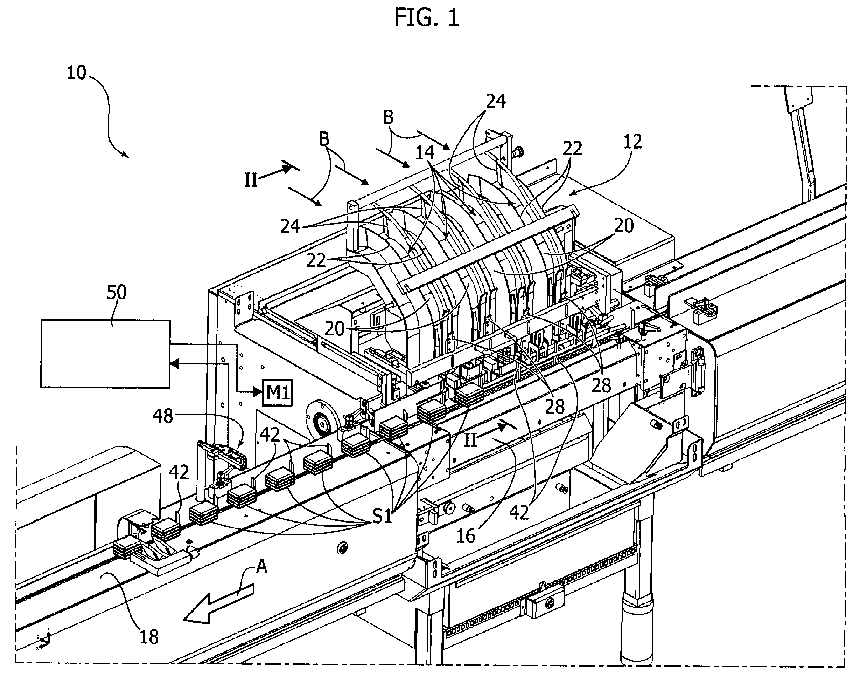

With reference to Figure 1, numeral 10 indicates a feeding device suitable for feeding a continuous succession of individual products or of stacks formed from a preset number of individual products to a packaging machine (not shown). The feeding device 10 comprises an accumulator 12 including one or more channels 14 suitable for receiving respective continuous arrays of individual products. The feeding device 10 comprises a conveyor 16 including a sliding plane 18 along which the products to be packaged are made to advance in a feed direction A, spaced apart from each other along said feeding direction A.

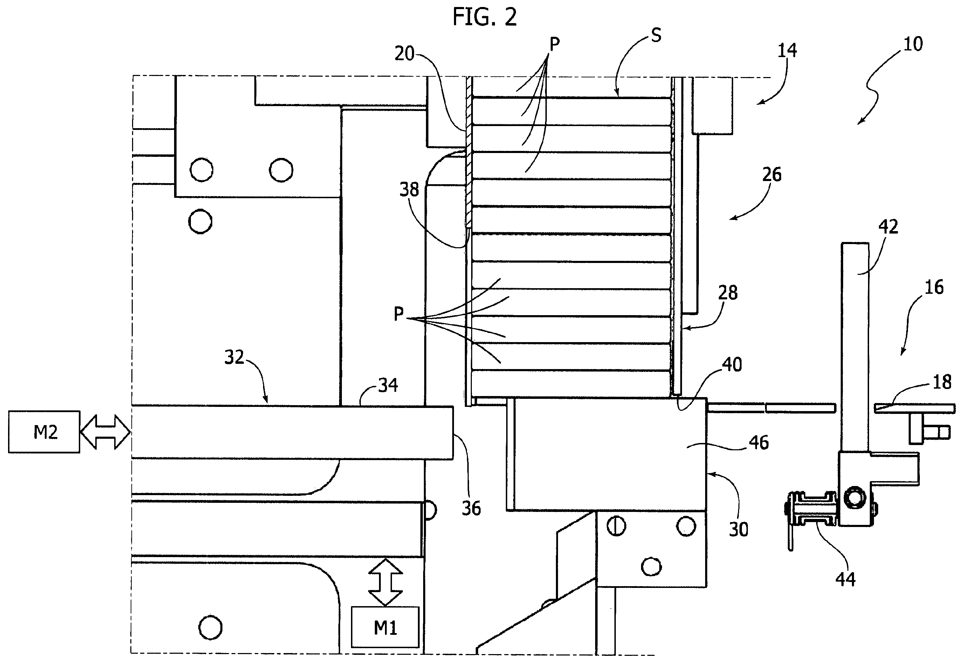

Each channel 14 has a bottom wall 20 and two side walls 22. Each channel 14 has an upper inlet section 24, to which continuous arrays of products are fed, in the direction indicated by the arrows B. Each channel 14 has a lower end 26 that extends in the vertical direction. Each channel 14 comprises a mask 28 located on the open front side of the lower end 26 (Figure 2) of the respective channel 14. Each mask 28 is movable in the vertical direction between a lowered position and a raised position.

With reference to Figures 2 to 5, within each channel 14, a continuous array of products P is contained. At the lower end 26 of each channel 14, the products P are stacked together in a vertical direction. The lowest product P rests on a stationary support 30.

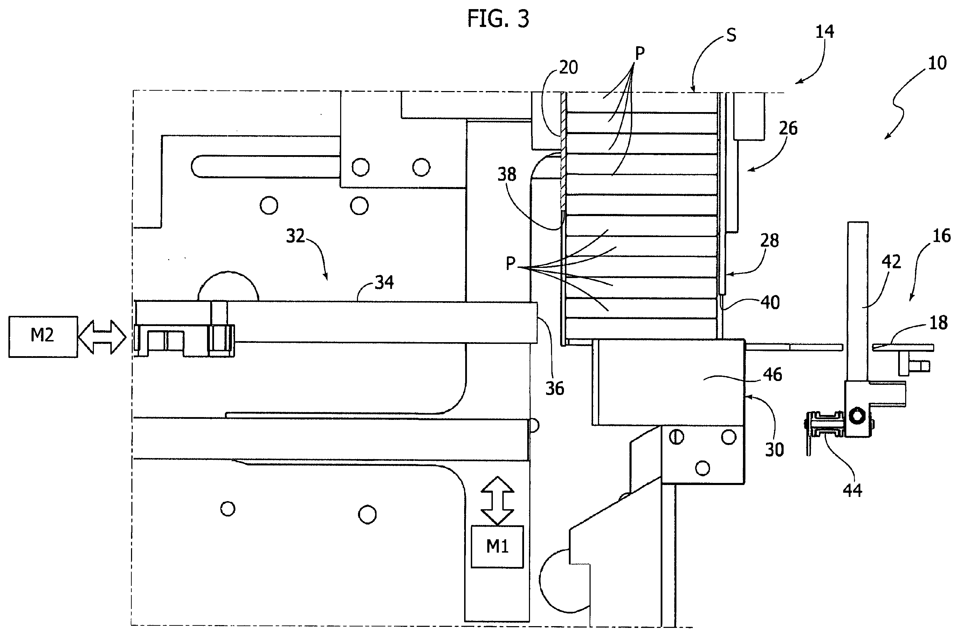

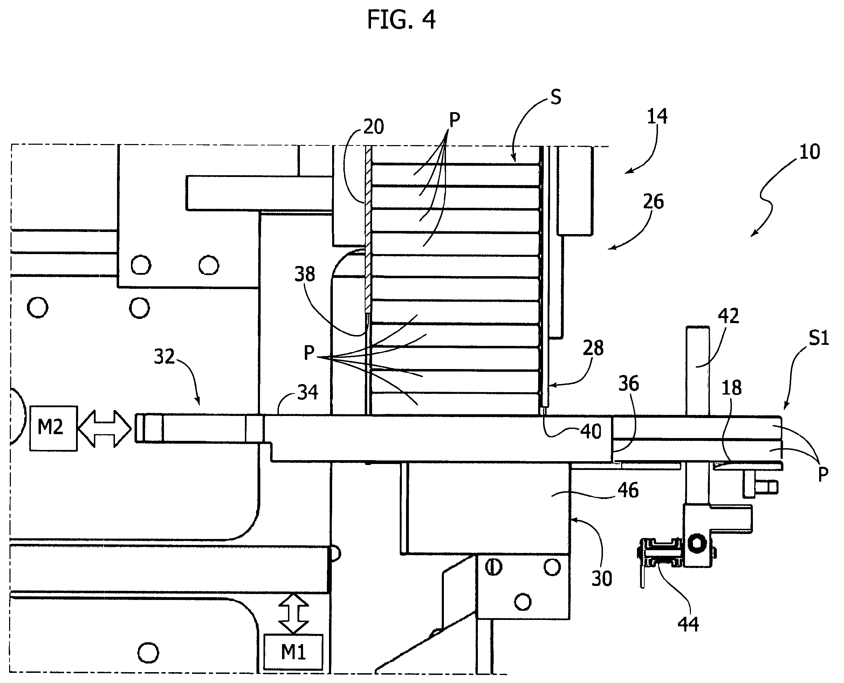

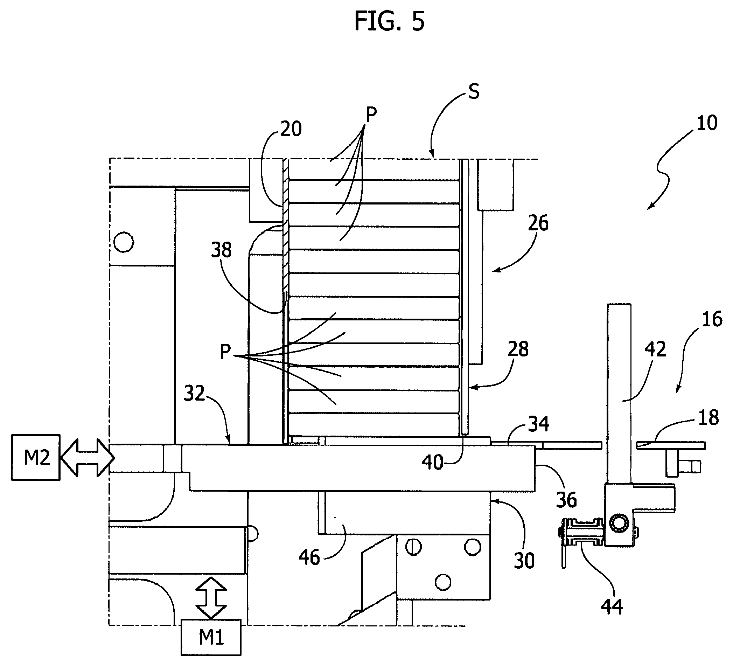

The feeding device 10 comprises an extractor element 32 equipped with a movement in the vertical direction between a lowered position and a raised position, and with a movement in the horizontal direction between a retracted position and an extracted position. The movements in the horizontal direction and in the vertical direction of the extractor element 32 are independent from each other. Preferably, these two movements are controlled by respective brushless electric motors M1, M2. The movement in the vertical direction of the extractor element 32 is synchronized and coordinated with the movement in the vertical direction of the mask 28. More specifically, when the extractor element 32 is in its lowered position (shown in Figures 2 and 5) the mask 28 is also in its lowered position and when the extractor element 32 is in its raised position (shown in Figures 3 and 4) the mask 28 is also in its raised position.

The extractor element 32 has an upper surface 34 and a front surface 36. The extractor element 32 has an operating cycle of 4 positions, during which the extractor element 32 moves along a rectangular path. Starting from the lowered and retracted position illustrated in Figure 2, the extractor element 32 moves in a vertical direction until reaching the raised and retracted position illustrated in Figure 3. Then, the extractor element 32 moves in the horizontal direction from the retracted raised position of Figure 3 to the extracted raised position of Figure 4. During this movement, the extractor element 32 passes through the lower end 26 of the respective channel 14. The rear wall 20 of each channel 14 has an opening 38 for the passage of the extractor element 32. During this step of the movement, the mask 28 is in the raised position, and the lower edge 40 of the mask 28 is above the upper wall 34 of the extractor element 32. During this movement in the horizontal direction, from the raised and retracted position to the raised and extracted position, the front surface 36 of the extractor element 32 extracts an individual product P from the lower end of the continuous array of products S, or a stack S1 formed from a preset number of individual products P. In the example shown, the feeding device is configured to extract a stack S1 formed of two products P. The stack S1 extracted from the lower end of the array S is pushed by the extractor element 32 onto the sliding plane 18 of the conveyor 16. The conveyor 16 is equipped with a plurality of pusher elements 42 moved by a chain 44, which push respective stacks S1 in the direction of transport A, orthogonal to the plane of representation of Figures 2-5. During the extraction step, the continuous array S contained within the channel 14 rests on the upper surface 34 of the extractor element 32.

After having completed the extraction of the stack S1, the extractor element 32 moves in the vertical direction downwards from the raised and extracted position of Figure 4 to the lowered and extracted position illustrated in Figure 5. During this movement, the extractor element 32 enters within a groove 46 of the stationary base 30. The extractor element 32 may have a comb shape with several parallel teeth that penetrate within respective grooves 46 of the stationary base 30. During this movement, the extractor element 32 lowers the continuous array S contained in the channel 14 until the product P at the lower end of the continuous array S rests on the upper surface of the stationary base 30. In the lowered position of the extractor element 32, the upper surface 34 of the extractor element 32 is lower than the upper surface of the stationary base 30.

Finally, the extractor element 32 is operated in the horizontal direction from the extracted lowered position of Figure 5 to the retracted lowered position of Figure 2, and begins a new operating cycle.

It is understood that for a correct functioning of the feeding device, it is necessary that in the raised position, the upper surface 34 of the extractor element 32 must be aligned to the upper surface of the individual product or stack of products to be extracted. If the upper surface 34 of the extractor element 32 is positioned higher than the upper surface of the stack S1 to be extracted, the front surface 36 of the extractor element 32 damages the product P immediately above the array S1 of products to be extracted. If the upper surface 34 of the extractor element 32 is lower than the upper surface of the stack S1 to be extracted, there is a risk that the product at the upper end of the stack S1 gets damaged from the lower edge 40 of the mask 28, the position of which is correlated to the position of the upper surface 34 of the extractor element 32.

In the case in which the products P have a constant height, it is possible to adjust the position of the upper surface 34 of the extractor element 32 at the end of the upward stroke, in order to avoid these drawbacks. However, it has been observed that in the case of bakery products, the height of the products P varies during the work shift, for example as a function of the air temperature and humidity, as a function of the oven temperature, water content in the dough, etc. Therefore, a feeding device regulated to function correctly with products P having a certain height may not work correctly when the height of the products P varies during the work shift.

To overcome these problems, the feeding device according to the present invention comprises sensor means arranged to measure the height of the individual products or of the stacks of products extracted in each operating cycle. The height of the upward stroke of the extractor element 32 from the lowered position to the raised position is corrected as a function of the measured height of the extracted individual products or of the extracted stacks of products.

With reference to Figure 1, the height of the individual products or of the extracted stacks of products can be measured by means of an optical sensor 48 arranged along the sliding plane 18 of the conveyor 16. The optical sensor 48 detects the height of the individual products or stacks of products that advance in the direction A. The height of the individual products or of the stacks of products, measured by the sensor 48, is processed by an electronic control unit 50 which, as a function of the value measured by the sensor 48, adjusts the upward stroke of the extractor elements 32.

As indicated above, the extractor elements 32 are preferably controlled by two independent motors: a first motor M1 controls the stroke in the vertical direction and a second motor M2 controls the stroke in the horizontal direction of the extractor elements 32. The adjustment of the stroke in the vertical direction of the extractor elements 32 is controlled by the electronic control unit 50 acting on the motor M1, which controls the vertical stroke of the extractor elements 32. Therefore, the feeding device is constantly adjusted in the correct mode, as a function of the height of the products or of the stacks of products to be packaged, without the need to carry out manual adjustments.

Of course, without prejudice to the principle of the invention, the details of construction and the embodiments may be widely varied with respect to those described and illustrated, without departing from the scope of the invention as defined by the following claims.

## Claims

1. Feeding device for a packaging machine, comprising:
- at least one channel (14) which, in use, contains a continuous array (S) of products (P), said channel (14) having a vertical lower end (26),
- a stationary base (30) located at the bottom of the channel (14), which supports said continuous array (S), and
- at least one extractor element (32) movable in a vertical direction between a lowered position and a raised position and movable in a horizontal direction between a retracted position and an extracted position, wherein in use the extractor element (32) is cyclically movable between a retracted lowered position, a retracted raised position, an extracted raised position, and an extracted lowered position, wherein during the movement from the retracted raised position to the extracted raised position the extractor element (32) extracts an individual product (P) or a stack of products (S1) from the bottom of said array (S),
**characterized in that** it comprises:
- sensor means (48) arranged to measure the height of said individual product (P) or of said stack of products (S1), and
- an electronic control unit (50) programmed to adjust the stroke of the movement in the vertical direction of said extractor element (32) as a function of the measured height of said individual product (P) or of said stack of products (S1).

2. A device according to claim 1, **characterized in that** the movement in the vertical direction and the movement in the horizontal direction of said extractor element (32) are respectively controlled by a first motor (M1) and by a second motor (M2), independent from each other, and **in that** said electronic control unit (50) controls said first motor (M1) as a function of the signals provided by said sensor means (48).

3. A device according to claim 1, **characterized in that** said at least one channel (14) comprises a mask (28) movable in a vertical direction between a lowered position and a raised position, wherein the movement in the vertical direction of said extractor element (32) is synchronized and coordinated with the movement in the vertical direction of said mask (28).

4. A device according to any of the preceding claims, **characterized in that** it comprises a conveyor (16) which receives said individual products (P) or said stacks of products (S1) and advances said individual products (P) or said stacks of products (S1) in a feed direction (A), wherein said sensor means (48) are arranged to measure the height of said individual products (P) or said stacks of products (S1) while they advance in said direction (A) on said conveyor (16).

## Patentansprüche

1. Zuführvorrichtung für eine Verpackungsmaschine, umfassend:
- mindestens einen Kanal (14), der im Gebrauch eine fortlaufende Anordnung (S) aus Produkten (P) enthält, wobei der Kanal (14) ein senkrechtes unteres Ende (26) aufweist,
- einen unten am Kanal (14) befindlichen feststehenden Träger (30), der die fortlaufende Anordnung (S) trägt, und
- mindestens ein Entnahmeelement (32), das in einer senkrechten Richtung zwischen einer abgesenkten Stellung und einer angehobenen Stellung bewegbar ist und in einer waagerechten Richtung zwischen einer zurückgezogenen Stellung und einer ausgefahrenen Stellung bewegbar ist, wobei das Entnahmeelement (32) beim Gebrauch periodisch zwischen einer zurückgezogenen abgesenkten Stellung, einer zurückgezogenen angehobenen Stellung, einer ausgefahrenen angehobenen Stellung und einer ausgefahrenen abgesenkten Stellung bewegbar ist, wobei während der Bewegung aus der zurückgezogenen angehobenen Stellung in die ausgefahrene angehobene Stellung das Entnahmeelement (32) ein einzelnes Produkt (P) oder einen Stapel von Produkten (S1) unten aus der Anordnung (S) entnimmt,
**dadurch gekennzeichnet, dass** sie Folgendes umfasst:
- Sensormittel (48), die so angeordnet sind, dass sie die Höhe des einzelnen Produkts (P) oder des Stapels von Produkten (S1) messen, und
- eine elektronische Steuereinheit (50), die so programmiert ist, dass sie den Hub der Bewegung in der senkrechten Richtung des Entnahmeelements (32) in Abhängigkeit von der gemessenen Höhe des einzelnen Produkts (P) oder des Stapels von Produkten (S1) anpasst.

2. Vorrichtung nach Anspruch 1, **dadurch gekennzeichnet, dass** die Bewegung in der senkrechten Richtung und die Bewegung in der waagerechten Richtung des Entnahmeelements (32) unabhängig voneinander von einem ersten Motor (M1) beziehungsweise von einem zweiten Motor (M2) gesteuert werden, und dadurch, dass die elektronische Steuereinheit (50) den ersten Motor (M1) in Abhängigkeit von den Signalen steuert, die von den Sensormitteln (48) geliefert werden.

3. Vorrichtung nach Anspruch 1, **dadurch gekennzeichnet, dass** der mindestens eine Kanal (14) eine Abdeckung (28) umfasst, die in einer senkrechten Richtung zwischen einer abgesenkten Stellung und einer angehobenen Stellung bewegbar ist, wobei die Bewegung in der senkrechten Richtung des Entnahmeelements (32) mit der Bewegung in der senkrechten Richtung der Abdeckung (28) synchronisiert und darauf abgestimmt ist.

4. Vorrichtung nach einem der vorhergehenden Ansprüche, **dadurch gekennzeichnet, dass** sie eine Fördereinrichtung (16) umfasst, die die einzelnen Produkte (P) oder den Stapel von Produkten (S1) aufnimmt und die einzelnen Produkte (P) oder den Stapel von Produkten (S1) in eine Vorschubrichtung (A) vorwärtsbewegt, wobei die Sensormittel (48) so angeordnet sind, dass sie die Höhe der einzelnen Produkte (P) oder der Stapel von Produkten (S1) messen, während sie sich in der Richtung (A) auf der Fördereinrichtung (16) vorwärtsbewegen.

## Revendications

1. Dispositif d'alimentation pour une machine d'emballage, comprenant :
- au moins un canal (14) qui, à l'usage, contient un groupe continu (S) de produits (P), ledit canal (14) ayant une extrémité inférieure verticale (26),
- une base fixe (30) positionnée au fond du canal (14) qui supporte ledit groupe continu (S), et
- au moins un élément extracteur (32) mobile dans une direction verticale entre une position abaissée et une position levée et mobile dans une direction horizontale entre une position rétractée et une position extraite, dans lequel, à l'usage, l'élément extracteur (32) est mobile, de manière cyclique, entre une position abaissée rétractée, une position levée rétractée, une position levée extraite et une position abaissée extraite, dans lequel pendant le déplacement de la position levée rétractée à la position levée extraite, l'élément extracteur (32) extrait un produit individuel (P) ou une pile de produits (S1) fond dudit groupe (S),
**caractérisé en ce qu'**il comprend :
- des moyens de capteur (48) agencés pour mesurer la hauteur dudit produit individuel (P) ou de ladite pile de produits (S1), et
- une unité de commande électronique (50) programmée pour ajuster la course du déplacement dans la direction verticale dudit élément extracteur (32) en fonction de la hauteur mesurée dudit produit individuel (P) ou de ladite pile de produits (S1).

2. Dispositif selon la revendication 1, **caractérisé en ce que** le déplacement dans la direction verticale et le déplacement dans la direction horizontale dudit élément extracteur (32) sont respectivement commandés par un premier moteur (M1) et par un second moteur (M2), indépendants l'un de l'autre et **en ce que** ladite unité de commande électronique (50) commande ledit premier moteur (M1) en fonction des signaux fournis par lesdits moyens de capteur (48).

3. Dispositif selon la revendication 1, **caractérisé en ce que** ledit au moins un canal (14) comprend un masque (28) mobile dans une direction verticale entre une position abaissée et une position levée, dans lequel le déplacement dans la direction verticale dudit élément extracteur (32) est synchronisé et coordonné avec le déplacement dans la direction verticale dudit masque (28).

4. Dispositif selon l'une quelconque des revendications précédentes, **caractérisé en ce qu'**il comprend un convoyeur (16) qui reçoit lesdits produits individuels (P) ou lesdites piles de produits (S1) et fait avancer lesdits produits individuels (P) ou lesdites piles de produits (S1) dans une direction d'alimentation (A), dans lequel lesdits moyens de capteur (48) sont agencés pour mesurer la hauteur desdits produits individuels (P) ou desdites piles de produits (S1) alors qu'ils avancent dans ladite direction (A) sur ledit convoyeur (16).
